# EUROPEAN PATENT APPLICATION

(11) **EP 3 024 194 A1**
(43) Date of publication of application: **25.05.2016**
(21) Application number: 14306847.6
(22) Date of filing: 20.11.2014
(51) Int. Cl.: H04L 29/06, G06Q 20/32, H04W 12/06, H04W 4/00

(54) **Method for accessing a service and corresponding server, device and system**

(71) Applicant: GEMALTO SA, 92190 Meudon (FR)
(72) Inventor: Paillart, Frédéric, 13881 GEMENOS Cedex (FR); Delhoste, Fabrice, 13881 GEMENOS Cedex (FR); Chretien, Stéphane, 13881 GEMENOS Cedex (FR)

(57) **Abstract**

The invention relates to a method 20 for accessing a service.

According to the invention, a device 12 and a server 16 access at least one transaction application key. The method comprises the following steps. A terminal 14 gets an identifier 22 relating to the device. The terminal sends to the server the device identifier 24. The server verifies 25 whether the device identifier is or is not authorized to access the service. Only if the device identifier is authorized to access the service, then the server sends to the device a transaction identifier and at least one transaction parameter 26. The device requests a device user to enter data 28. The device user enters data 210. The device generates 212 a response by using the entered data, the at least one transaction application key and the at least one transaction parameter. The device sends to the server a transaction request accompanied with the transaction identifier and the response 214. The server verifies 215 whether the response does or does not match an expected result relating to the transaction. Only if the response does match the expected result, then the server authenticates the device user and the device and the server authorizes 216, 218 the transaction.

The invention also relates to corresponding server, device and system.

## Description

### Field of the invention:

The invention relates generally to a method for accessing a service.

Furthermore, the invention pertains to a server for accessing a service.

Moreover, the invention also relates to a device for accessing a service.

The present invention is notably applicable to a mobile radio-communication field in which the device is a mobile terminal, like e.g. a mobile (tele)phone.

Finally, the invention concerns a system for accessing a service. The system includes one or several terminals, one or several devices and a server.

### State of the art:

As known per se, a mobile phone is being more and more used for accessing a mobile payment service. To access the mobile payment service, the mobile phone supports a corresponding mobile payment application.

However, a malware may capture user credentials that are used for accessing the mobile payment service during an execution of the mobile payment application.

There is a need to access securely a service from a mobile phone that prevents from being captured by a malware that is supported by the mobile phone.

### Summary of the invention:

The invention proposes a solution for satisfying the just herein above specified need by providing a method for accessing a service.

According to the invention, a device and a server access at least one transaction application key. The method comprises the following steps. A terminal gets an identifier relating to the device. The terminal sends to the server the device identifier. The server verifies whether the device identifier is or is not authorized to access the service. Only if the device identifier is authorized to access the service, then the server sends to the device a transaction identifier and at least one transaction parameter. The device requests a device user to enter data. The device user enters data. the device generates a response by using the entered data, the at least one transaction application key and the at least one transaction parameter. The device sends to the server a transaction request accompanied with the transaction identifier and the response. The server verifies whether the response does or does not match an expected result relating to the transaction. Only if the response does match the expected result, then the server authenticates the device user and the device and the server authorizes the transaction.

The principle of the invention consists in using a server to identify a device, through a connected terminal, prior to sending back, when the identified device is authorized, a transaction identifier and one (or several) transaction parameter(s). The device sends back the transaction identifier and a response by using the transaction parameter(s), data entered by the device user and a key shared between the device and the server. The server determines whether the response is or is not equal to expected data. Only if the response is the expected data, the server authenticates the device and its user and authorizes the transaction.

Otherwise, i.e. if a registered device and/or the device user is(are) not authenticated by the server, the server forbids the device to get access to a service.

It is noteworthy that the terminal may retrieve a device identifier by using any communication technology, like e.g. by reading a two or three dimensional code that is physically presented by or associated with the device and that includes a device identifier.

The device is able to authenticate to the server by using a transaction application key(s) that is(are) stored and provided by the device, user credentials to be provided by the device user and the transaction parameter(s) provided by the server.

Three elements, namely an identifier relating to the device, a transaction key managed by a device application and user authentication data, as user credentials, are needed to carry out a transaction and a corresponding service.

These three elements constitute a three factor authentication mechanism. The three factor authentication mechanism is based on what is owned by the device user, such as either a device or an accessory of the device that may be wearable and that may present physically an identifier of the device, what is known to the device user, namely user credentials, and what the device supports, namely a device application that accesses a transaction application key(s).

A robber of the device may get access to an identifier relating to the device and the transaction application key(s) but is not able to get access to the user credentials that are only known to the user.

A malware may get access to the device, its application and a transaction application key(s) and capture user credentials by using a keylogger but is not able to get access to an identifier of the device that is not stored by the device.

A malicious robber who spies a device user may get access to an identifier relating to the device and the user credentials but is not able to get access to the transaction application key(s).

The server does only authorize a transaction with a device, when this latter is registered as such, authenticated and with a device user that submits user credentials, as entered data, that the server authenticates. Thus, the server allows the device to access securely a service, like e.g. a payment of a product(s) and/or a service(s) to a merchant server.

Thus, the invention solution allows securely accessing a service managed by the server.

Moreover, a service provider or another third party that operates the server does not need to pre-provision any user credentials, as user authentication data, into the device since the user credentials are authenticated only at the server side.

The invention solution is also therefore convenient for the service provider or another third party.

According to a further aspect, the invention is a server for accessing a service.

According to the invention, the server accesses at least one transaction application key. The server is configured to receive a device identifier, to verify whether the device identifier is or is not authorized to access the service, to send, only if the device identifier is authorized to access the service, a transaction identifier and at least one transaction parameter, to receive a transaction request accompanied with the transaction identifier and a response, to verify whether the response does or does not match an expected result relating to the transaction, to authenticate, only if the response does match the expected result, the device user and the device and to authorize the transaction.

According to still a further aspect, the invention is a device for accessing a service.

According to the invention, the device accesses at least one transaction application key. The device is configured to receive a transaction identifier and at least one transaction parameter, to request a device user to enter data, to receive entered data, to generate a response by using data entered by a device user, the at least one transaction application key and the at least one transaction parameter, to send a transaction request accompanied with the transaction identifier and the response.

It is to be noted that the device may be any kind of communicating device, like e.g. a user terminal or a Secure Element (or SE).

According to still a further aspect, the invention is a system for accessing a service.

According to the invention, the system comprises at least one terminal, at least one device and a server. The terminal is configured to get an identifier relating to the device, to send to the server the device identifier. The server comprises means for accessing at least one transaction application key. The server is configured to verify whether the device identifier is or is not authorized to access the service, to send, only if the device identifier is authorized to access the service, to the device a transaction identifier and at least one transaction parameter. The device comprises means for accessing the at least one transaction application key. The device is configured to request a device user to enter data, to receive entered data, to generate a response by using data entered by a device user, the at least one transaction application key and the at least one transaction parameter, to send a transaction request accompanied with the transaction identifier and the response. The server is configured to verify whether the response does or does not match an expected result relating to the transaction, to authenticate, only if the response does match the expected result, the device user and the device, and to authorize the transaction.

### Brief description of the drawings:

Additional features and advantages of the invention will be apparent from a detailed description of one preferred embodiment of the invention, given as an indicative and non-limitative example, in conjunction with the following drawings:

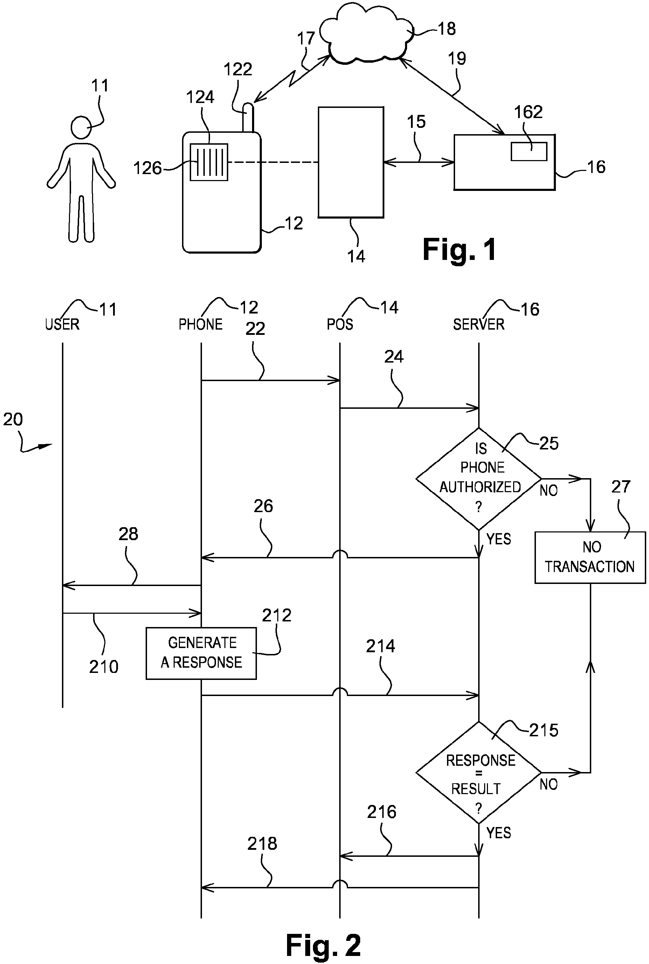

- Figure 1 illustrates a simplified diagram of an embodiment of a system comprising a mobile phone, as a (client) device, a Point Of Sale (or POS) type terminal and a remote server, the server being configured to receive a phone identifier, to check whether the identified phone is authorized to access a service, and to issue to the authorized phone a transaction identifier and a transaction parameter(s), according to the invention; and
- Figure 2 represents an embodiment of a message flow between the POS type terminal, the phone and the server of figure 1, so that, further to an authorized device identification, the server sends to the device a transaction identifier and parameter(s) that are used along with user credentials and a shared transaction application key(s) by the device to generate a response, so that the server authenticates, based on the response, successfully the device and the device user prior to authorizing a requested transaction.

### Detailed description:

Herein under is considered a case in which the invention method for accessing a service is implemented by a mobile phone, as a standalone device for accessing a service, a POS type terminal and a remote server.

According to another embodiment (not represented), the invention method for accessing a service is implemented by a mobile equipment, as a device for accessing a service, comprising, being coupled or connected to an SE, a terminal and a remote server. In other words, the device does cooperate with an SE, so as to access a transaction application key that is securely stored within the SE. According to such an embodiment, the device for accessing a service is adapted to perform the functions that are carried out by the mobile phone and that are described infra apart from a storage of the transaction application key(s) and a generation of a response that are both carried out by the SE.

The SE may be an incorporated chip, like e.g. an embedded Universal Integrated Circuit Card (or eUICC), within a user terminal, as an SE host device, or a chip that is included within a smart card or another medium and coupled to the user terminal, as an SE host device. The chip may be either fixed to or removable from its host device.

The invention does not impose any constraint as to a kind of the SE type. As removable SE, it may be a Subscriber Identity Module (or SIM) type card, a Secure Removable Module (or SRM), a smart dongle of the USB (acronym for "Universal Serial Bus") type, a (micro-) Secure Digital (or SD) type card or a Multi-Media type Card (or MMC) or any format card to be coupled to a host device, as device for accessing a service.

Naturally, the herein below described embodiment is only for exemplifying purposes and is not considered to reduce the scope of the invention.

**Figure 1** shows schematically a system 10 including a mobile phone 12, a POS type terminal 14 and a remote server 16.

For the sake of simplicity, the mobile phone 12, the POS type terminal 14 and the remote server 16 are termed herein after the phone 12, the POS 14 and the server 16 respectively.

Only one phone 12, as a user terminal, and only one POS 14, as a terminal, are represented for clarity reasons.

However, the server 16 is accessible, Over-The-Air (or OTA), Over-The-Internet (or OTI) and/or Over The Cloud (or OTC), by a fleet of connected devices, as terminals and user terminals.

The phone 12, as a user terminal, is connected, over a communication network(s) termed infra the network 18, to the server 16.

The network 18 may include one or several cellular (tele)communication networks, like e.g. a Global System for Mobile Communications (or GSM), a General Packet Radio Service (or GPRS), a Universal Mobile Telecommunications System (or UMTS), an EDGE (acronym for "Enhanced Data Rates for GSM Evolution"), a Code Division Multiple Access (or CDMA) and/or a Long Term Evolution (or LTE) type network(s).

Such a cellular communication network set is not exhaustive but only for exemplifying purposes.

The network 18 may include a WLAN (acronym for "Wireless Local Area Network") or an Internet or Intranet type network that is accessed through a Short Range (or SR) radio-communication link(s), like e.g. Bluetooth, Wifi, Zigbee, an Near Field Communication (or NFC) type link(s).

Instead of a phone 12, as user terminal, it may be, for instance, a desktop computer, a laptop computer, a media-player, a game console, a tablet, a netbook, a handset and/or a Personal Digital Assistance (or PDA) that incorporates or cooperates with a baseband radio processor.

Instead of a phone 12, it may be any other device including means for processing data, comprising or being connected to Long Range (or LR) or SR Radio-Frequency (or

RF) communication means for exchanging data with outside, and comprising or being connected to means for storing data.

The phone 12 is able to exchange data, in a distant manner, with any entity included or connected to the network 18, like e.g. the server 16.

The phone 12 is used for accessing the network 18.

The phone 12 includes one or several microprocessors, as means for processing data, comprising or being connected to an antenna 122 for exchanging data with outside, comprising or being connected to means for interfacing with a user, as Man Machine Interface (or MMI), and comprising or being connected to one or several memories, as means for storing data.

The phone MMI may include a keyboard (not represented), a loudspeaker (not represented) and/or a display screen (not represented).

The phone MMI is used for presenting information to a phone user 11, like e.g. a message for prompting the user to enter data, as user credentials, and for getting data entered by the user.

The phone MMI allows a phone user to interact with the phone 12.

The memories may be constituted by one or several EEPROMs (acronym for "Electrically Erasable Programmable Read-Only Memory"), one or several ROMs (acronym for "Read Only Memory"), one or several Flash memories, and/or any other memories of different types, like one or several RAMs (acronym for "Random Access Memory").

The antenna 122 allows communicating data, through an LR RF link 17, via the network(s) 18, with the server 16.

The LR RF may be fixed at several hundreds of MHz, e.g. around 850, 900, 1800, 1900 and/or 2100 MHz.

Instead of or additionally to LR communication means, the phone 12 may be connected to or include Contact-Less communication means for exchanging data with outside, like e.g. via a Wifi-hotspot (not represented), as a Network Access Point (or NAP), with the server 16.

Within the present description, the adjective "Contact-Less" (or CL) denotes notably that the communication means communicates via one or several SR RF links.

The SR RF link(s) may be related to any CL technology that allows the phone 12 to exchange data, through a CL type link, with the server 16. The SR RF may be related to e.g. an NFC, a Wi-Fi, a Bluetooth and/or a Bluetooth Low Energy (or BLE) type communication technology(ies) or the like, as a non-mobile (radio) communication channel.

The phone 12 is provided with e.g. a sticker 124, as a medium removable from the phone 12.

The medium is preferably owned by the phone user.

The medium is stuck on, fixed or linked to the phone 12.

Alternately (not represented), the medium is independent from the phone 12. The medium may be linked to a watch or a headset, as an accessory of the phone 12. The medium may be linked to any other wearable device, like e.g. a camera, a clothing of the phone user, a jewel of the phone user, a body of the phone user or anything that may accommodate the medium and that the phone user accesses.

The sticker 124 has or presents, on its external face, a Quick Response (or QR) code, a bocode or a barcode, as a two or three dimensional code termed code 126 infra.

The code 126 is placed preferably, in a static manner, on the sticker 124.

The code 126 includes an International Mobile Equipment Identity (or IMEI), a Mobile Subscriber Integrated Services Digital Network-number (or MSISDN), an International Mobile Subscriber Identity (or IMSI) and/or an email address, as an identifier(s) relating to the phone 12.

The code 126 is preferably readable by the POS 14, as a terminal.

Alternatively (not represented), one (or several) identifier(s) relating to the phone 12 is(are) entered or selected by the phone user at an MMI comprised within or connected to the POS 14.

The POS 14 is preferably equipped with a camera (not represented) to read the code 126 and thus to get the phone identifier.

The POS 14, as a NAP, is connected, through a wire or wireless link 15, to the server 16.

A phone microprocessor, as data processing means, processes data originating from either an internal component or an external entity.

A phone memory(ies), as data storing means, may comprise one or several volatile memories and one and/or several non-volatile memories.

The phone memory does not store preferably any user credentials, like e.g. a Personal Identity Number (or PIN) and/or a password. The user credentials are known only to the phone user and the server 16.

A phone memory stores one (or several) transaction (application) key(s) k.

Alternately, an external memory, like e.g. a memory of an SE, stores a transaction key(s) k.

The transaction key(s) k may be asymmetric or symmetric.

The phone memory stores an Operating System (or OS) and one or several applications to be executed by a phone microprocessor.

As an application supported by the phone 12, there is a mobile payment application, as a (phone) transaction application, that allows communicating with an external device, like e.g. the server 16.

The transaction application allows getting the transaction key(s) k that is(are) stored within the phone memory.

The transaction application allows generating a response by using the stored transaction key(s) k, data, as user credentials, to be entered by the phone user, a transaction (application) parameter(s) to be received from the server 16.

To generate a response, the transaction application uses a predetermined transaction algorithm, like e.g. a Rivest Shamir Adleman (or RSA), an Advanced Encryption Standard (or AES), a Data Encryption Standard (or DES) type algorithm or the like, the transaction key(s) k that are both shared with the server 16, the data to be entered by the phone user and the transaction parameter(s) to be received from the server 16.

Once the phone 12 has generated a response, the phone 12 is configured to send a transaction request accompanied with a transaction identifier to be received from the server 16 and the response.

The phone 12 may further accompany the transaction request with an Application IDentifier (or AID), as an identifier relating to the phone transaction application.

The phone microprocessor executes, in a preferred manner, one or several security functions.

The security functions include preferably a user authentication process to be used prior to continuing an execution of an application, like e.g. the transaction application, to be executed by the phone 12. To authenticate the user, the user has to provide a PIN or biometric data, as user reference data. The user reference data is stored within the phone (or an incorporated or coupled SE) memory.

The server 16, like e.g. a Cloud Authentication Service (or C.A.S.) server, is connected, for instance, via a cable, through a bi-directional link 19, to the network 18.

The server 16 authorizes or forbids a client device, like e.g. the phone 12, to carry out a mobile payment transaction or service.

A sender of a received message is a terminal, like e.g. the POS 14, that addresses the first message to the server 16.

The received message comprises a server 16 identifier, as an addressee or recipient of the received message.

The server 16 is identified by a Uniform Resource Identifier (or URI), like e.g. an Uniform Resource Locator (or URL), an Internet Protocol (or IP) address or the like, as an identifier relating to the server 16. The server identifier may be stored within a (client) device memory (or an incorporated or coupled SE memory).

The server 16 may be operated by a Mobile Network Operator, as an MNO or a Mobile Virtual Network Operator (or MVNO), a bank operator, a service provider or on its behalf.

The server 16 is integrated within an entity of a system, as a back-end OTA system.

The server 16 is hosted by a computer.

According to a preferred embodiment, the server 16 is hosted by, coupled or connected to a Hardware Security Module (or HSM) (not represented) that stores, manages transaction (application) keys and other keys and provides a crypto-processing service(s) in a secure manner, notably generate expected data for a requested transaction by using, as further explained infra, a transaction key, a transaction (application) parameter(s) and credentials relating to the concerned user.

The server 16 includes a microprocessor(s) (not represented), as data processing means.

The server 16 includes a memory 162, as data storing means.

Alternatively, instead of an external memory, the server 16 is connected to an external memory.

The server memory 162 stores a (server) transaction application, as an invention application that is supported by the server 16.

The server memory 162 stores a database, like e.g. an Oracle type database.

The server 16 is dedicated to running the transaction application for managing the database.

The database includes, as a white list and/or a black list, a predetermined set(s) of one or several identifiers relating, each, to an authorized client device. Such a device identifier set associates with each device identifier information relating to either an authorization for accessing the requested service or an interdiction for accessing the requested service.

The server 16 is configured to receive an identifier relating to a client device.

The device identifier(s) may include an IMEI, an IMSI, a user identifier, an MSISDN and/or an SE identifier.

The device identifier(s) may be provided by the client device itself, a device, like e.g. an SE, that is included within or coupled to the client device and/or an entity(ies), that is(are) used to transmit to the server 16, besides a message for requesting a transaction, the device identifier(s).

The device identifier(s) to be received by the server 16 is(are) used by the server 16, so as to verify whether the thus identified device does or does not belong to a white or a black list of devices to access a requested transaction or service.

If the identified device is not authorized to access the service, then the server 16 aborts a thus launched transaction process and no data needed to perform the transaction is issued to an identified device. The server 16 may further inform the concerned terminal and/or the identified device that the identified device is not authorized to perform the transaction. The identified device is therefore not able to access a service that needs to be provided with transaction data, to go further in the launched transaction process.

Otherwise, i.e. only if the identified device is authorized to access the service, the server 16 is arranged to continue the launched transaction process by further issuing transaction data that is needed to perform the transaction. The server 16 is preferentially able to cipher transaction data to be sent by using a key relating to the authorized device, as a key shared between the authorized device and the server 16.

The server 16 may be arranged to either generate dynamically a transaction identifier or to retrieve a previously generated transaction identifier stored within the server memory 162.

The server 16 may be arranged to either generate dynamically a transaction parameter(s) or to retrieve a previously generated transaction parameter(s) stored within the server memory 162.

The database registers, for each authorized device, a predetermined transaction algorithm, a transaction identifier, a corresponding transaction key(s) k, a transaction parameter(s) in association with user credentials.

The transaction key(s) may be associated with either all the authorized devices or specific to each authorized device.

The transaction parameter(s) include(s) a challenge and/or one or several (electronic) token(s), like e.g. an Open AuTHentication (or OAuTH) type token.

The server 16 is configured to send, further to an identification of an authorized (client) device for a requested transaction, to the authorized device a response request accompanied with a transaction identifier and a transaction parameter(s), as transaction data that are allocated to the concerned authorized device and for the concerned transaction.

When an identified device is registered within the database as being authorized (or not being forbidden), the transaction application allows transmitting to the authorized device, preferably in a ciphered manner, a transaction identifier and a transaction parameter(s) of the database to an identified authorized device.

The server 16 is arranged to generate an expected result R by using the predetermined transaction algorithm, the transaction key(s) k both shared with the concerned authorized device, the transaction parameter(s) sent to the concerned authorized device, and user credentials.

The expected result R is stored within the database in association with the other transaction data relating to the concerned authorized device for an identified transaction.

The server 16 is configured to compare a response RES to be received from the concerned identified device to the expected result R relating to an identified transaction.

If the received response RES does not match the expected result R, then the server 16 fails to authenticate the device and the device user and does not authorize to perform the requested transaction. After each authentication failure, the server 16 may increment a ratification counter that is originally set to an initial value, like e.g. zero, so as to authorize a client device to perform one or several additional attempts. Prior to reaching a predetermined Threshold (or T), the server 16 may undertake one or several actions. Once the counter reaches the predetermined T, after a predetermined number of authorized attempts that has not to be exceeded, the server 16 aborts a transmission of the corresponding transaction authorization.

Alternately, instead of incrementing a ratification counter, the server 16 countdowns a counter that has been initially set to a predetermined original value, like e.g. a predetermined number of authorized attempts that has not to be exceeded to get a valid response RES.

Otherwise, i.e. only if the received response RES does match the expected result R, the server 16 succeeds in authenticating the concerned device and the device user. Once the received response RES is successfully verified or validated, the server 16 sends subsequently an authorization message(s) to the involved terminal, like e.g. the POS 14, and/or an interlocutor (client) device, like e.g. the phone 12.

**Figure 2** depicts an exemplary embodiment of a message flow 20 that involves the phone 12, as a user terminal, the POS 14 and the server 16, as an application server.

In the described example, it is assumed that the phone 12 is provided, on the back side, with a sticker 124 that presents its IMEI included within a (QR type) code 126 and the POS 14 is able to read, via a camera, the code 126.

It is further assumed that the phone 12 supports a transaction application and stores a predetermined transaction application algorithm and a transaction application key k to be used as an input of the transaction application algorithm.

A phone user 11 approaches the back side of her/his phone 12 to the POS 14 to initiate a transaction process, so that the POS 14 gets 22, through the camera, the code 126.

Alternately, the phone user 11 enters an MSISDN related to her/his phone 12 on a POS MMI.

According to an alternative embodiment, the phone user enters, via the phone MMI, an MSISDN related to her/his phone 12 that is then sent, through a CL type link, to the POS 14.

It is assumed that the POS 14 exchanges with the server 16 by using e.g. HyperText Transfer Protocol (or HTTP) or HTTP Secure (or HTTPS) type messages. However, any other data communication protocol between the POS 14 and the server 16 may be used alternatively or additionally to the HTTP(S) protocol.

Once the POS 14 has decoded the code 126, i.e. the IMEI is extracted or detected, the POS 14 sends to the server 16 a message 24, like an HTTPS POST type message, including a request for getting transaction data along with the IMEI, as the phone identifier.

The message 24 includes a predetermined URL relating to the server 16, as a particular server identifier.

The server 16 verifies 25 whether the IMEI, as phone identifier, is or is not authorized to access a thus requested service.

If the server 16 identifies the phone 12 that is not authorized, then the server 16 denies access to the service and aborts the initiated transaction process. No transaction 27 is thus performed.

On the contrary, i.e. only if the IMEI is authorized to access the service, the server 16 sends to the phone 12 a push type message 26 that includes a request for getting a response and transaction data comprising a transaction identifier and a transaction challenge, as a transaction parameter.

Additionally, the transaction data includes an OAuTH token, as a further transaction parameter, so as to enhance the security level of the transaction process.

Optionally, the server 16 ciphers at least the transaction data prior to its sending.

Upon receiving a response request along with the transaction data, the phone 12 then launches a transaction application after a possible decipherment of the transaction data.

The phone 12 prompts 28 the phone user 11, through the phone MMI, to enter data.

The phone user 11 enters 210 data, as PIN and user credentials.

Then, the phone transaction application uses the entered data, the transaction application key, the transaction challenge and possibly the OAuTH token, as input data to the transaction application algorithm, so as to generate 212 a corresponding response.

Once the response is generated, the phone 12 sends to the server 16 a message 214, as a response to the push type message, like an HTTPS POST type message, including a transaction request accompanied with the transaction identifier and the response.

Optionally, the message 214 includes, besides the transaction request accompanied with the transaction identifier and the response, an AID, as an identifier relating to the phone transaction application.

The server 16 verifies 215 whether the received response does or does not match an expected result R that is previously determined. To determine the expected result R, the server transaction application uses the registered PIN, as user credentials, the transaction application key, the transaction challenge and possibly the OAuTH token, as input data to the transaction application algorithm.

If the received response does not match the expected result R, then the server 16 aborts the launched transaction process. No transaction 27 is thus performed.

Otherwise, i.e. only if the received response does match the expected result R and is therefore valid, the server 16 authenticates the phone user 11 and the phone 12. Then, the server 16 sends to the POS 14 a message 216, like a HTTP response 200 OK type message, for informing that the server 16 authorizes the (requested) transaction. Additionally, the server 16 sends to the phone 12 a message 218, like a HTTP response 200 OK type message, for informing the identified phone transaction application that the server 16 authorizes the (requested) transaction.

Then, the server 16 may create a payment session possibly by addressing a bank server (not represented), so as to carry out a payment from a phone user bank account (to be debited) to another bank account (to be credited).

The invention solution allows thus carrying out a secure transaction while involving data presented by a user, possibly through a medium owned by the user, user credentials to be provided by a client device user, a transaction application key resident on the client device and transaction data provided by the server.

## Claims

1. A method (20) for accessing a service,
**characterized in that,** a device (12) and a server (16) accessing at least one transaction application key, the method comprises the following steps:
- a terminal gets an identifier (22) relating to the device;
- the terminal sends to the server the device identifier (24);
- the server verifies (25) whether the device identifier is or is not authorized to access the service;
- only if the device identifier is authorized to access the service, then the server sends to the device a transaction identifier and at least one transaction parameter (26);
- the device requests a device user to enter data (28);
- the device user enters data (210);
- the device generates (212) a response by using the entered data, the at least one transaction application key and the at least one transaction parameter;
- the device sends to the server a transaction request accompanied with the transaction identifier and the response (214);
- the server verifies (215) whether the response does or does not match an expected result relating to the transaction;
- only if the response does match the expected result, then the server authenticates the device user and the device and the server authorizes (216, 218) the transaction.

2. Method according to claim 1, wherein, the device supporting a transaction application, the device sends to the server, besides the transaction request accompanied with the transaction identifier and the response, an identifier relating to the device transaction application.

3. Method according to claim 1 or 2, wherein the device identifier is included within at least one element of a group comprising:
- a Quick Response (QR) code (126);
- a barcode; and
- a bocode.

4. Method according to any previous claim, wherein the device identifier is presented by a medium (124), the medium being owned by the device user.

5. Method according to claim 4, wherein the medium is linked to the device.

6. Method according to any previous claim, wherein the at least one transaction parameter includes a challenge and/or at least one token.

7. Method according to any previous claim, wherein the entered data includes user authentication data.

8. A server (16) for accessing a service,
**characterized in that,** the server accessing at least one transaction application key, the server is configured:
- to receive a device identifier (24);
- to verify (25) whether the device identifier is or is not authorized to access the service;
- to send, only if the device identifier is authorized to access the service, a transaction identifier and at least one transaction parameter (26);
- to receive a transaction request accompanied with the transaction identifier and a response (214);
- to verify (215) whether the response does or does not match an expected result relating to the transaction;
- to authenticate, only if the response does match the expected result, the device user and the device; and
- to authorize (216, 218) the transaction.

9. A device (12) for accessing a service,
**characterized in that,** the device accessing at least one transaction application key, the device is configured:
- to receive a transaction identifier and at least one transaction parameter (26);
- to request a device user to enter data (28);
- to receive entered data (210);
- to generate a response (212) by using data entered by a device user, the at least one transaction application key and the at least one transaction parameter;
- to send a transaction request accompanied with the transaction identifier and the response (214).

10. A system (10) for accessing a service,
**characterized in that,** the system comprising at least one terminal (14), at least one device (12) and a server (16), the terminal is configured:
- to get an identifier (22) relating to the device;
- to send to the server the device identifier (24);
**in that,** the server comprising means for accessing at least one transaction application key, the server is configured:
- to verify (25) whether the device identifier is or is not authorized to access the service;
- to send, only if the device identifier is authorized to access the service, to the device a transaction identifier and at least one transaction parameter (26);
**in that,** the device comprising means for accessing the at least one transaction application key, the device is configured:
- to request a device user to enter data (28);
- to receive entered data (210);
- to generate (212) a response by using data entered by a device user, the at least one transaction application key and the at least one transaction parameter;
- to send a transaction request accompanied with the transaction identifier and the response (214);
**in that** the server is configured:
- to verify (215) whether the response does or does not match an expected result relating to the transaction;
- to authenticate, only if the response does match the expected result, the device user and the device; and
- to authorize (216, 218) the transaction.
